(19) Europäisches Patentamt
European Patent Office
Office européen des brevets

(11) **EP 4 599 970 A1**

(12) **EUROPEAN PATENT APPLICATION**
published in accordance with Art. 153(4) EPC

(43) Date of publication:
**13.08.2025 Bulletin 2025/33**

(51) International Patent Classification (IPC):
**B23H 7/02** (2006.01)

(21) Application number: **22965794.5**

(52) Cooperative Patent Classification (CPC):
**B23H 7/02**

(22) Date of filing: **16.11.2022**

(86) International application number:
**PCT/JP2022/042595**

(87) International publication number:
**WO 2024/105818 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FANUC CORPORATION**
**Oshino-mura**
**Minamitsuru-gun**
**Yamanashi 401-0597 (JP)**

(72) Inventor: **TAGUCHI, Haruka**
**Minamitsuru-gun, Yamanashi 401-0597 (JP)**

(74) Representative: **Keil & Schaafhausen**
**Patentanwälte PartGmbB**
**Bockenheimer Landstraße 25**
**60325 Frankfurt am Main (DE)**

(54) **DEVICE AND METHOD FOR CONTROLLING WIRE ELECTRICAL DISCHARGE MACHINE**

(57) This device for controlling a wire electrical discharge machine according to one embodiment of the present disclosure is equipped with: an acquisition unit for acquiring a detection value of the machining voltage; a digital low-pass filter for outputting a correction value by removing noise from the detection value; a determination unit for making a first determination in which the degree of noise removal from the digital low-pass filter is deter-mined, and/or a second determination in which the response lag of the digital low-pass filter is determined, on the basis of the shape of the machining path and the machining conditions; an adjustment unit for adjusting a parameter of the digital low-pass filter; and a machining control unit for controlling electrical discharge machining on the basis of the correction value.

FIG. 1

EP 4 599 970 A1

# EP 4 599 970 A1

**Description**

TECHNICAL FIELD

The present disclosure relates to a control device and a control method for a wire electrical discharge machine (a device and a method for controlling a wire electrical discharge machine).

BACKGROUND ART

In JP 6883138 B1, a wire electrical discharge machine is disclosed.

SUMMARY OF THE INVENTION

In such a wire electrical discharge machine, stable electrical discharge machining is desired.

A first aspect of the present disclosure is characterized by a control device for a wire electrical discharge machine configured to carry out electrical discharge machining on a workpiece, by applying a machining voltage to an electrode gap between a wire electrode and the workpiece to generate an electrical discharge at the electrode gap while moving the wire electrode and the workpiece relatively along a machining path, the control device including: an acquisition unit configured to acquire a detection value of the machining voltage from a voltage sensor configured to detect the machining voltage; a digital low pass filter configured to output a compensated value obtained by compensating the detection value by removing noise from the detection value; a determination unit configured to carry out, based on a shape of the machining path and a machining condition of the electrical discharge machining, at least one of a first determination to determine a degree of noise removal by the digital low pass filter, or a second determination to determine a response delay of the digital low pass filter; an adjustment unit configured to adjust a parameter of the digital low pass filter, based on a determination result of the determination unit; and a machining control unit configured to control the electrical discharge machining based on the compensated value.

A second aspect of the present invention is characterized by a control method for a wire electrical discharge machine configured to carry out electrical discharge machining on a workpiece, by applying a machining voltage to an electrode gap between a wire electrode and the workpiece to generate an electrical discharge at the electrode gap while moving the wire electrode and the workpiece relatively along a machining path, the control method including: an acquisition step of acquiring a detection value of the machining voltage from a voltage sensor configured to detect the machining voltage; an output step of outputting a compensated value obtained by compensating the detection value by removing noise from the detection value by using a digital low pass filter; a determination step of carrying out, based on a shape of the machining path and a machining condition of the electrical discharge machining, at least one of a first determination to determine a degree of noise removal by the digital low pass filter, or a second determination to determine a response delay of the digital low pass filter; an adjustment step of adjusting a parameter of the digital low pass filter, based on a determination result in the determination step; and a machining control step of controlling the electrical discharge machining based on the compensated value.

BRIEF DESCRIPTION OF DRAWINGS

[FIG. 1] FIG. 1 is a block diagram showing a wire electrical discharge machine, and a control device for the wire electrical discharge machine according to a first embodiment;
[FIG. 2] FIG. 2 is a diagram for describing an example of a smoothing process using a digital LPF;
[FIG. 3] FIG. 3 is a diagram illustrating a detection value of a machining voltage, and a compensated value of the detection value;
[FIG. 4] FIG. 4 is a diagram showing an example of a machining path having an inner corner shape;
[FIG. 5] FIG. 5 is a diagram schematically showing a discharge pulse having a predetermined discharge pulse width and a predetermined discharge power;
[FIG. 6] FIG. 6 is a flowchart illustrating an example of a processing sequence in relation to a machining control of electrical discharge machining by the control device of the first embodiment;
[FIG. 7] FIG. 7A is a diagram illustrating an example of a detection value, and a compensated value output by a digital LPF the parameter of which is not adjusted, in the case that electrical discharge machining is carried out on the machining path including the inner corner section, and FIG. 7B is a diagram illustrating an example of a detection value, and a compensated value output by the digital LPF the parameter of which is adjusted by the first modification, in the case that electrical discharge machining is carried out on the machining path including the inner corner section;

[FIG. 8] FIG. 8 is a diagram showing an example of a machining path having an outer corner shape;

[FIG. 9] FIG. 9 is a flowchart illustrating an example of a processing sequence in relation to a machining control of electrical discharge machining by a control device of a second embodiment;

[FIG. 10] FIG. 10A is a diagram illustrating an example of a detection value, and a compensated value output by the digital LPF the parameter of which is not adjusted, in the case that electrical discharge machining is carried out on the machining path including the outer corner segment, and FIG. 10B is a diagram illustrating an example of a detection value, and a compensated value output by the digital LPF the parameter of which is adjusted by the second modification, in the case that electrical discharge machining is carried out on the machining path including the outer corner segment; and

[FIG. 11] FIG. 11 is a diagram for describing another example of a smoothing process using a digital LPF.

## DETAILED DESCRIPTION OF THE INVENTION

A machining voltage (cutting volt) at the time of electrical discharge machining is detected, and an electrical discharge machining control is carried out using a detection value thereof. Such a detection value contains noise. Therefore, a compensated value obtained by reducing the noise contained in the detection value by a filter is used in the electrical discharge machining control. However, if the degree of noise removal by the filter is inappropriate, there is a possibility that the electrical discharge machining may not be stable.

(First Embodiment)

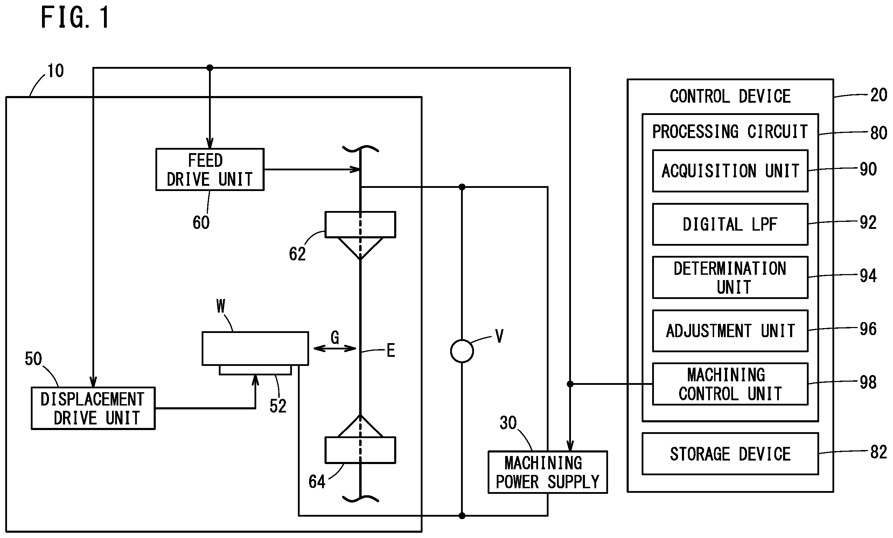

FIG. 1 is a block diagram showing a wire electrical discharge machine 10, and a control device 20 for the wire electrical discharge machine according to a first embodiment. The control device 20 for the wire electrical discharge machine 10 controls the wire electrical discharge machine 10, to cause the wire electrical discharge machine 10 to carry out electrical discharge machining on a workpiece (an object to be machined) W. In the wire electrical discharge machine 10 of FIG. 1, only a portion of the configuration in relation to the electrical discharge machining of the workpiece W is shown.

The wire electrical discharge machine 10 generates electrical discharge by applying a machining voltage to an electrode gap G between a wire electrode E and the workpiece W, while the wire electrode E and the workpiece W are made to move relatively along the machining path. The application of the machining voltage to the electrode gap G is carried out by a machining power supply 30. The wire electrical discharge machine 10, by generating an electrical discharge in the electrode gap G, carries out the electrical discharge machining on the workpiece W. The machining voltage applied to the electrode gap G is detected by a voltage sensor V.

The wire electrical discharge machine 10 includes a displacement drive unit 50, a table 52, a feed drive unit 60, an upper wire guide 62, and a lower wire guide 64. The displacement drive unit 50 includes a motor and a drive transmission mechanism, neither of which are shown. The drive transmission mechanism converts a rotational motion of the motor into a linear motion. The drive transmission mechanism, for example, is a ball screw and a nut or the like. The workpiece W is supported by the table 52. Relative movement between the wire electrode E and the workpiece W is carried out, for example, by the displacement drive unit 50 causing the table 52 to move.

The wire electrode E is supported by the upper wire guide 62 and the lower wire guide 64. The feed drive unit 60 includes a motor and a roller, neither of which are shown. The motor rotates the roller, and thereby causes the roller to feed the wire electrode E at a predetermined speed. The wire electrode E is fed from the upper wire guide 62 to the lower wire guide 64. The wire electrode E, at a position between the upper wire guide 62 and the lower wire guide 64, forms an electrode gap G between the workpiece W and the wire electrode E.

The control device 20 includes a processing circuit 80, and a storage device 82. The processing circuit 80 includes a processor such as a CPU or a GPU or the like. The storage device 82 includes a volatile memory such as a RAM or the like, and a non-volatile memory such as a ROM or a flash memory or the like. The volatile memory is used as the working memory of the processor. The non-volatile memory stores programs that are executed by the processor and other necessary data. The storage device 82 also stores a machining program used for electrical discharge machining.

The processing circuit 80 includes an acquisition unit 90, a digital LPF (digital low pass filter) 92, a determination unit 94, an adjustment unit 96, and a machining control unit 98. By the processing circuit 80 executing a program stored in the storage device 82, the acquisition unit 90, the digital LPF 92, the determination unit 94, the adjustment unit 96, and the machining control unit 98 are realized. At least a portion of the acquisition unit 90, the digital LPF 92, the determination unit 94, the adjustment unit 96, and the machining control unit 98 may be realized by an integrated circuit such as an ASIC or an FPGA or the like, or an electronic circuit including a discrete device.

The acquisition unit 90 acquires a detection value D of the machining voltage from the voltage sensor V. Noise is generated at the time of electrical discharge machining. The digital LPF 92 compensates the acquired detection value D by removing noise (for example, white noise) from the detection value D. The digital LPF 92 outputs a compensated value C obtained by compensating the detection value D of the machining voltage.

The determination unit 94 performs a first determination for determining the degree of noise removal by the digital LPF 92 based on the shape of the machining path and the machining conditions of the electrical discharge machining.

The adjustment unit 96 adjusts a parameter of the digital LPF 92, based on the determination result of the determination unit 94. By the parameter being adjusted, the degree of noise removal by the digital LPF 92 changes. For example, in the first determination by the determination unit 94, in the case that the degree of noise removal by the digital LPF 92 is determined to be weak, the adjustment unit 96 adjusts the parameter, and thereby strengthens the degree of noise removal.

The machining control unit 98 reads out the machining path from a machining program that is stored in the storage device 82. The machining control unit 98 controls the displacement drive unit 50, and thereby causes the wire electrode E and the workpiece W to move relatively along the machining path. The machining control unit 98 controls the feed drive unit 60 and thereby causes the feed drive unit to feed the wire electrode E from the upper wire guide 62 to the lower wire guide 64. The machining control unit 98 controls the machining power supply 30, and thereby causes the electrical discharge to be generated in the electrode gap G. Consequently, the wire electrical discharge machine 10 is capable of carrying out electrical discharge machining on the workpiece W.

The machining control unit 98 controls the electrical discharge machining based on the compensated value C. Specifically, based on the compensated value C, the machining control unit 98 controls at least one of the relative speed between the wire electrode E and the workpiece W, or the discharge power. The relative speed and the discharge power are changed to values in accordance with, for example, the shape of the machining path, or the machining conditions of the electrical discharge machining.

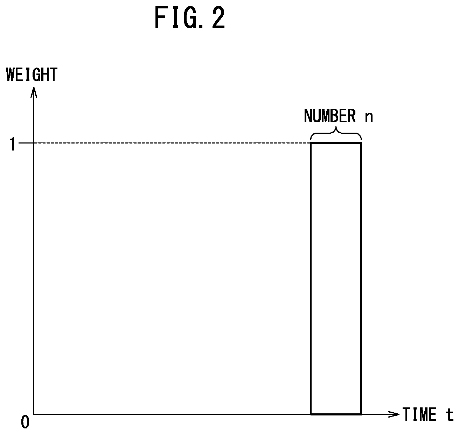

FIG. 2 is a diagram for describing an example of a smoothing process using the digital LPF 92. In the smoothing process, the detection value D(t) of the machining voltage acquired at time t is compensated by Equation (1), and a compensated value C(t) is output. According to the Equation (1), the compensated value C(t) is an average value of a predetermined number n of the detection values D that were acquired in the past at a predetermined time interval i. Stated otherwise, the compensated value C(t) is obtained by multiplying each of the n values, i.e., each of the past detection values D(k) = D(t), D(t-i), ..., D(t-ix(n-1)), by an equal weight of 1, summing the results, and dividing the sum by the predetermined number n.

$$C(t) = \frac{1}{n} \sum_{k=t-i \times (n-1)}^{t} D(k) \qquad \dots (1)$$

Each time that the detection value D(t) is acquired along with the passage of time t, by way of the Equation (1), the average value of the predetermined number n past detection values D is calculated. The digital LPF 92 outputs the calculated average value of the detection values D as the compensated value C(t) corresponding to the detection value D(t) acquired at time t. Accordingly, the digital LPF 92 serves as a moving average filter. The predetermined number n is a parameter of the digital LPF 92. The adjustment unit 96 adjusts the predetermined number n based on a determination result of the determination unit 94.

The adjustment unit 96, by increasing the predetermined number n, is capable of strengthening the degree of the smoothing process. By the smoothing process, high frequency noise is removed. More specifically, the adjustment unit 96, by increasing the predetermined number n, is capable of strengthening the degree of noise removal by the digital LPF 92.

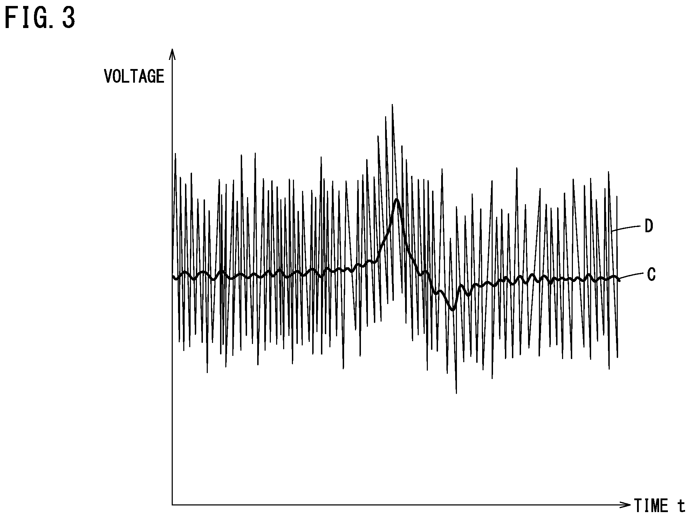

FIG. 3 is a diagram illustrating a detection value D of the machining voltage, and a compensated value C of the detection value D. FIG. 3 shows how the detection value D and the compensated value C change along with the passage of time t. In the example shown in FIG. 3, the detection value D contains a large amount of noise. This noise is derived mainly from white noise generated at the time of electrical discharge machining, and is made up from frequency components over a wide band.

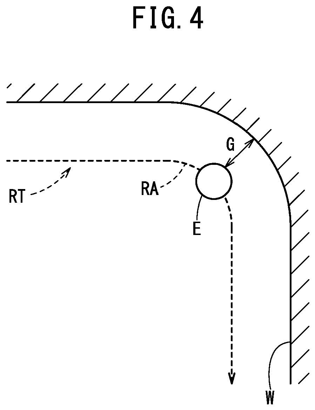

FIG. 4 is a diagram showing an example of the machining path RT having an inner corner shape. The machining path RT in FIG. 4 includes a path segment RA that is not a straight-shaped path segment but is of an inner corner shape. The shape of the path segment RA is a curved inner corner shape. The workpiece W is positioned on the outer side of the curve. When electrical discharge machining is carried out along the path segment RA, the workpiece W is machined into a concave shape. Moreover, in the present specification, the curved shape includes an arched shape, and a shape obtained by a straight line being bent.

The wire electrical discharge machine 10 generates electrical discharge by applying a machining voltage to the electrode gap G, while the wire electrode E and the workpiece W are made to move relatively along the machining path RT. The amount of machining in the path segment RA having the inner corner shape is greater than that of the straight-shaped path segment. The noise generated at the time of electrical discharge machining also tends to become stronger. In the case that the degree of noise removal by the digital LPF 92 is weak, when the machining control is carried out based on the compensated value C that is output from the digital LPF 92, the amount of machining may be insufficient.

Further, due to the insufficiency of the machining amount, there is also a possibility that hunting of the wire electrode E may occur. In such a case, the detection value D of the machining voltage can oscillate. In particular, in the case that the discharge power is small, and further, the discharge pulse width is also small, hunting of the wire electrode E is likely to occur in the path segment RA of the inner corner shape.

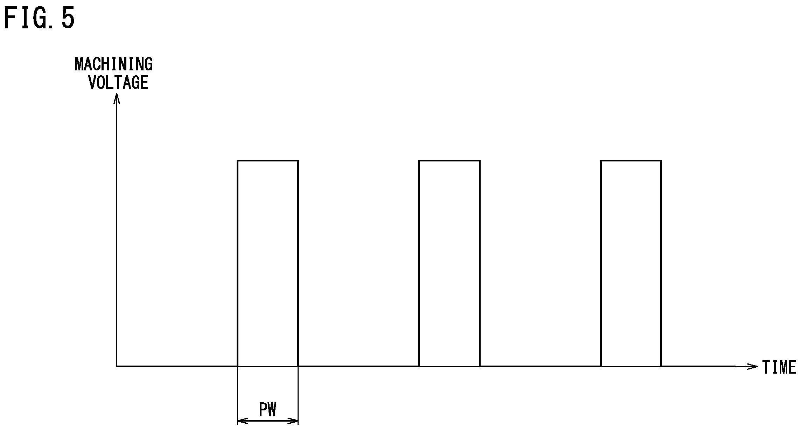

FIG. 5 is a diagram schematically showing a discharge pulse having a predetermined discharge pulse width PW and a predetermined discharge power. The predetermined discharge pulse width PW corresponds to the width of each of periodic discharge pulses on the time axis. The predetermined discharge power is determined in accordance with the machining voltage that is periodically applied to the electrode gap G.

In the case that the machining shape is an inner corner shape, and further, a predetermined condition in relation to the machining conditions based on the discharge pulse width PW and the discharge power PR is satisfied, it is necessary to increase the degree of noise removal by the digital LPF 92. In the first determination, in the case that the shape of the machining path RT is an inner corner shape and that the predetermined conditions in relation to the machining conditions are satisfied, the determination unit 94 determines that the degree of noise removal by the digital LPF 92 is weak. The predetermined conditions in relation to the machining conditions are expressed by Equation (2) and Equation (3). The Equation (2) indicates that the discharge power PR is smaller than a first predetermined value PR0. The Equation (3) indicates that the discharge pulse width PW is smaller than a second predetermined value PW0.

$$PR < PR0 \qquad \ldots (2)$$

$$PW < PW0 \qquad \ldots (3)$$

In the first determination, in the case that the degree of noise removal by the digital LPF 92 is determined to be weak, the adjustment unit 96 increases the predetermined number n that is included in the Equation (1). In this manner, the adjustment unit 96 increases the degree of noise removal by the digital LPF 92. The detection value D next acquired is compensated by the digital LPF 92 in which the degree of noise removal has become stronger. In this manner, the noise contained in the compensated value C output from the digital LPF 92 is reduced. When at least one of the two conditions represented by the Equations (2) and (3) is no longer satisfied, the predetermined number n included in the Equation (1) may be returned to an initial value.

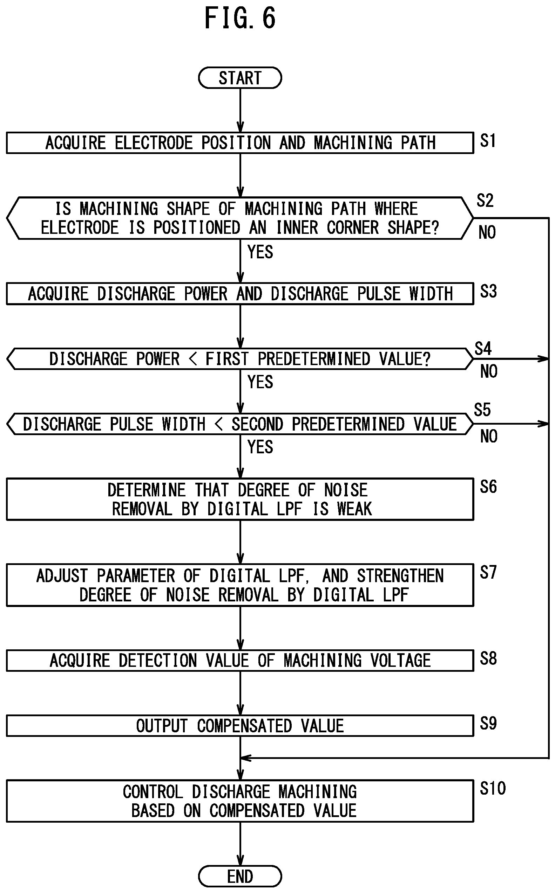

FIG. 6 is a flowchart illustrating an example of a processing sequence in relation to a machining control of the electrical discharge machining by the control device 20 of the first embodiment. The present processing sequence is periodically carried out, for example, by the processing circuit 80 of the control device 20. When the processing sequence is started, in step S1, the determination unit 94 acquires, from the machining control unit 98, the electrode position of the wire electrode E and the machining path RT along which the wire electrode E moves. Moreover, the machining control unit 98 acquires the machining path RT by analyzing the machining program. Further, the machining control unit 98 acquires, from an encoder provided on the motor of the feed drive unit 60, the electrode position of the wire electrode E with respect to the workpiece W.

In step S2, the determination unit 94 determines whether or not the machining shape of the machining path RT on which the electrode position is positioned is an inner corner shape. In the case that the electrode position is on the path segment RA (see FIG. 4) of the inner corner shape, then the answer in step S2 becomes YES. In the case that the answer has become YES in step S2, the present processing sequence proceeds to step S3. In the case that the answer has become NO in step S2, the present processing sequence proceeds to step S10.

In step S3, the determination unit 94 acquires from the machining control unit 98 the discharge power PR and the discharge pulse width PW. In step S4, the determination unit 94 determines whether or not the discharge power PR acquired in step S3 is smaller than the first predetermined value PR0. In the case that the answer in step S4 has become YES, the present processing sequence proceeds to step S5. In the case that the answer has become NO in step S4, the present processing sequence proceeds to step S10.

In step S5, the determination unit 94 determines whether or not the discharge pulse width PW acquired in step S3 is smaller than the second predetermined value PW0. In the case that the answer in step S5 has become YES, the present processing sequence proceeds to step S6. In the case that the answer has become NO in step S5, the present processing sequence proceeds to step S10. In step S6, the determination unit 94 determines that the degree of noise removal by the digital LPF 92 is weak.

In step S7, the adjustment unit 96 adjusts the parameter of the digital LPF 92, and thereby strengthens the degree of noise removal by the digital LPF 92. In the case that the smoothing process (refer to FIG. 2) expressed by the Equation (1) is carried out by the digital LPF 92, the adjustment unit 96 adjusts, as a parameter of the digital LPF 92, the predetermined number n included in the Equation (1). In the adjustment of the predetermined number n, the adjustment unit 96 makes the predetermined number n larger.

In step S8, the acquisition unit 90 acquires the detection value D of the machining voltage from the voltage sensor V. In step S9, by removing noise from the detection value D acquired in step S8, the digital LPF 92 compensates the detection value D. The digital LPF 92 outputs the compensated value C obtained by compensating the detection value D. In step S10, the machining control unit 98 controls the electrical discharge machining based on the compensated value C by the digital LPF 92 the parameter of which has been adjusted. When the process of step S10 is completed, the present processing sequence comes to an end.

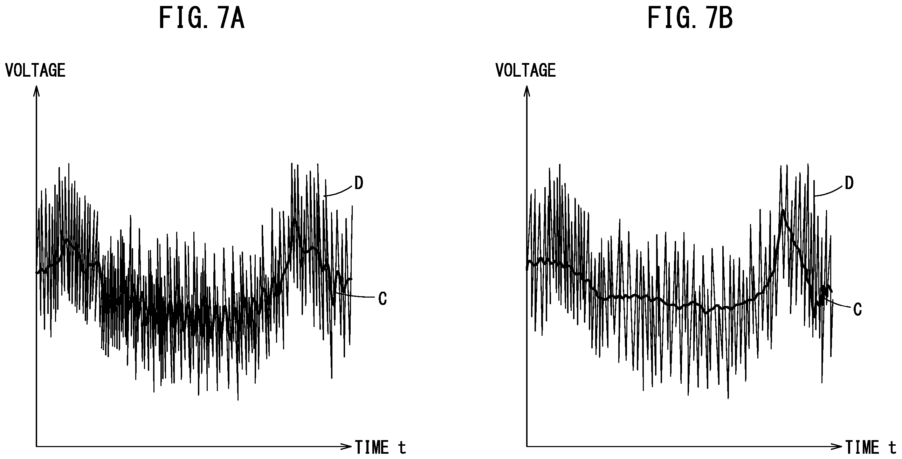

FIG. 7A is a diagram illustrating an example of the detection value D, and the compensated value C output by the digital LPF 92 the parameter of which is not adjusted, in the case that electrical discharge machining is carried out along the machining path RT including the inner corner shape. FIG. 7B is a diagram illustrating an example of the detection value D, and the compensated value C output by the digital LPF 92 the parameter of which is adjusted by the present embodiment, in the case that electrical discharge machining is carried out along the machining path RT including the inner corner shape. FIG. 7A and FIG. 7B both show variation of the machining voltage with time t.

A case is assumed in which, in the path segment RA of the inner corner shape shown in FIG. 4, the aforementioned hunting of the wire electrode E has occurred. FIG. 7A shows how the detection value D of the machining voltage oscillates. The compensated value C of the detection value D is subject to influence of the oscillation of the detection value D. In this embodiment, the parameter of the digital LPF92 is adjusted to strengthen the degree of noise removal. Accordingly, as shown in FIG. 7B, the oscillation of the detection value D is suppressed, and the compensated value C is stabilized. Since the compensated value C is stabilized, the electrical discharge machining control carried out by the machining control unit 98 based on this compensated value C can be improved.

(Second Embodiment)

A control device 20 according to a second embodiment is also represented by the block diagram shown in FIG. 1. The determination unit 94 carries out a second determination for determining a response delay of the digital LPF 92 based on the shape of the machining path RT and the machining conditions of the electrical discharge machining.

The adjustment unit 96 adjusts a parameter of the digital LPF 92, based on the determination result of the determination unit 94. By the parameter being adjusted, the response delay of the digital LPF 92 changes. For example, in the second determination by the determination unit 94, in the case that the response delay of the digital LPF 92 is determined to be long, the adjustment unit 96 adjusts the parameter, and thereby shortens the response delay.

The parameter of the digital LPF 92 that is adjusted by the adjustment unit 96, similar to the first embodiment, is the predetermined number n included in the Equation (1). The adjustment unit 96 adjusts the predetermined number n based on a determination result of the determination unit 94. The adjustment unit 96, by making the predetermined number n smaller, is capable of shortening the response delay of the digital LPF 92.

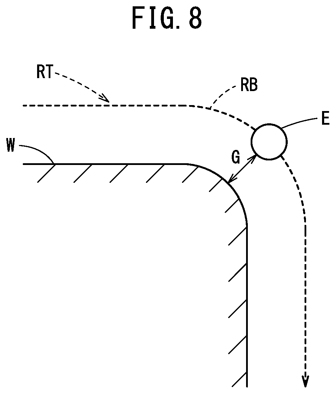

FIG. 8 is a diagram showing an example of a machining path RT having an outer corner shape. The machining path RT in FIG. 8 includes a path segment RB having an outer corner shape which is not a straight-shaped path segment. The shape of the path segment RB is a curved outer corner shape. The workpiece W is positioned on the inner side of the curve. When the electrical discharge machining is carried out along the path segment RB, the workpiece W is machined into a convex shape.

The wire electrical discharge machine 10 generates electrical discharge by applying a machining voltage to the electrode gap G, while the wire electrode E and the workpiece W are made to move relatively along the machining path RT. The amount of machining in the path segment RB having the outer corner shape is smaller than that of the straight-shaped path segment. Accordingly, in the case that the relative position of the wire electrode E has reached the path segment RB of the outer corner shape, it is preferable to raise the relative movement speed between the wire electrode E and the workpiece W quickly. Alternatively, it is preferable to reduce the discharge power of the electrical discharge generated in the electrode gap G promptly. For this purpose, it is preferable to be capable of quickly detecting that the relative position of the wire electrode E has reached the path segment RB of the outer corner shape.

The speed at which the wire electrode E and the workpiece W move relative to each other is determined by a PI control, based on the machining voltage and a proportional gain KP in the PI control. In the case that the machining shape is an outer corner shape, and a predetermined condition in relation to the machining conditions based on the proportional gain KP is satisfied, it is necessary to shorten the response delay of the digital LPF 92.

In the second determination, in the case that the shape of the machining path RT is an outer corner shape and that the predetermined condition in relation to the machining conditions is satisfied, the determination unit 94 determines that the response delay of the digital LPF 92 is long. The predetermined condition in relation to the machining conditions is expressed by Equation (4). The Equation (4) indicates that the proportional gain KP is smaller than a third predetermined value KP0.

$$KP < KP0 \qquad \dots(4)$$

In the second determination, in the case that the response delay of the digital LPF 92 is determined to be long, the adjustment unit 96 makes the predetermined number n included in the Equation (1) smaller. In this manner, the adjustment unit 96 shortens the response delay of the digital LPF 92. The detection value D that is next acquired is compensated by the digital LPF 92, the response delay of which has become shortened. In this manner, the response delay of the digital LPF 92 that outputs the compensated value C is shortened. When the condition represented by the Equation (4) is no longer satisfied, the predetermined number n included in the Equation (1) may be returned to an initial value.

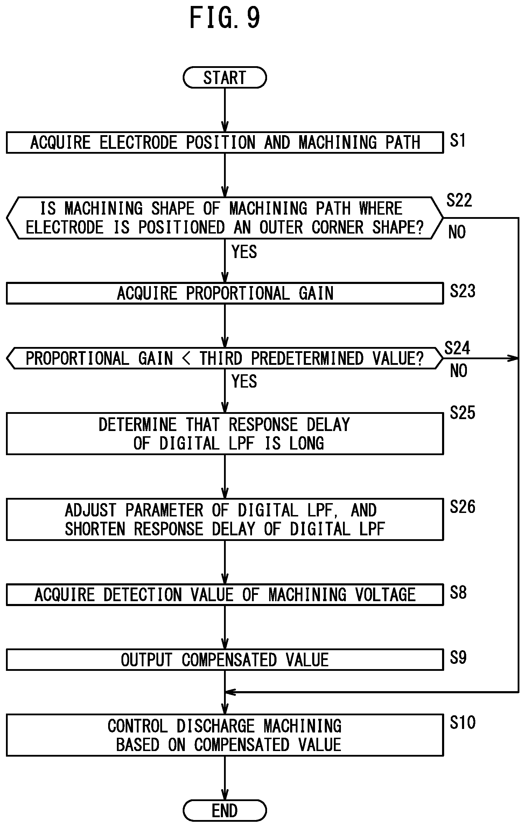

FIG. 9 is a flowchart illustrating an example of a processing sequence in relation to a machining control of the electrical discharge machining by the control device 20 of the second embodiment. The present processing sequence is periodically carried out, for example, by the processing circuit 80 of the control device 20. The reference numerals assigned to the steps of the present processing sequence shown in FIG. 9 partially coincide with the reference numerals assigned to the steps of the processing sequence shown in FIG. 6. In steps whose reference numerals coincide, the same processes are performed, and therefore, descriptions of the processes in those steps will be omitted.

When the process of step S1 is completed, the determination unit 94 determines in step S22 whether or not the machining shape of the machining path RT on which the electrode position is positioned is an outer corner shape. In the case that the electrode position is on the path segment RB (see FIG. 8) of the outer corner shape, then the answer in step S22 becomes YES. In the case that the answer in step S22 has become YES, the present processing sequence proceeds to step S23. In the case that the answer has become NO in step S22, the present processing sequence proceeds to step S10.

In step S23, the determination unit 94 acquires the aforementioned proportional gain KP from the machining control unit 98. In step S24, the determination unit 94 determines whether or not the proportional gain KP acquired in step S23 is smaller than the third predetermined value KP0. In the case that the answer has become YES in step S24, the present processing sequence proceeds to step S25. In the case that the answer has become NO in step S24, the present processing sequence proceeds to step S10.

In step S25, the determination unit 94 determines that the response delay of the digital LPF 92 is long. In step S26, the adjustment unit 96 adjusts the parameter of the digital LPF 92, and thereby shortens the response delay of the digital LPF 92. In the case that the smoothing process (refer to FIG. 2) expressed by the Equation (1) is carried out by the digital LPF 92, the adjustment unit 96 adjusts, as a parameter of the digital LPF 92, the predetermined number n included in the Equation (1). In the adjustment of the predetermined number n, the adjustment unit 96 makes the predetermined number n smaller.

When the process of step S26 is completed, the present processing sequence proceeds to step S8. In step S10, the machining control unit 98 controls the electrical discharge machining based on the compensated value C by the digital LPF 92 the parameter of which has been adjusted. When the process of step S10 is completed, the present processing sequence comes to an end.

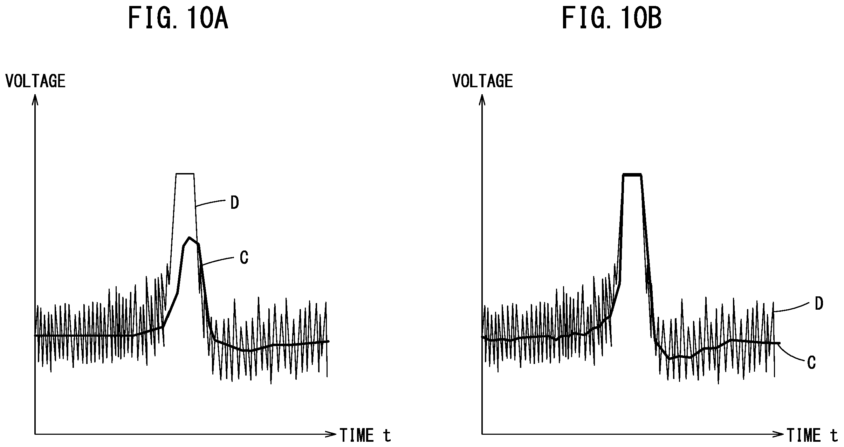

FIG. 10A is a diagram illustrating an example of the detection value D, and the compensated value C output by the digital LPF 92 the parameter of which is not adjusted, in the case that electrical discharge machining is carried out along the machining path RT including the outer corner path segment. FIG. 10B is a diagram illustrating an example of the detection value D, and the compensated value C output by the digital LPF 92 the parameter of which is adjusted according to the present embodiment, in the case that electrical discharge machining is carried out along the machining path RT including the outer corner path segment. FIG. 10A and FIG. 10B both show variation of the machining voltage with time t.

As shown in FIG. 10A and FIG. 10B, there is a time period during which the detection value D increases. This time period is a time period during which the relative position of the wire electrode E moves along the path segment RB of the outer corner shape. In the path segment RB of the outer corner shape, since the frequency of occurrence of electrical discharge decreases, the detection value D of the machining voltage rises. In the case that the detection value D has risen, based on the compensated value C of the detection value D, the machining control unit 98 controls at least one of the relative speed between the wire electrode E and the workpiece W, or the discharge power.

However, in the case that the response delay of the digital LPF 92 is long, as shown in FIG. 10A, after the detection value D has risen, the compensated value C starts to rise later than the detection value D. Accordingly, in the case that the parameter of the digital LPF 92 is not adjusted, electrical discharge machining control based on the compensated value C by the machining control unit 98 is also delayed. In the case that the outer corner shape of the path segment RB is of a shape formed by a straight line being bent, the response delay of the digital LPF 92 becomes more noticeable in comparison with in case of an arched shape.

In the present embodiment, when it is determined that the response delay of the digital LPF 92 is long, the adjustment unit 96 adjusts the parameter of the digital LPF 92, and thereby shortens the response delay of the digital LPF 92. In such a case, as shown in FIG. 10B, following the rise in the detection value D, the compensated value C promptly rises. Accordingly, in the case that the parameter of the digital LPF 92 is adjusted, the electrical discharge machining control based on the compensated value C by the machining control unit 98 can be improved. The electrical discharge machining is carried out in a stable manner, and high machining accuracy can be maintained.

[Modifications]

Each of the above-described respective embodiments may be modified in the following manner.

(Modification 1)

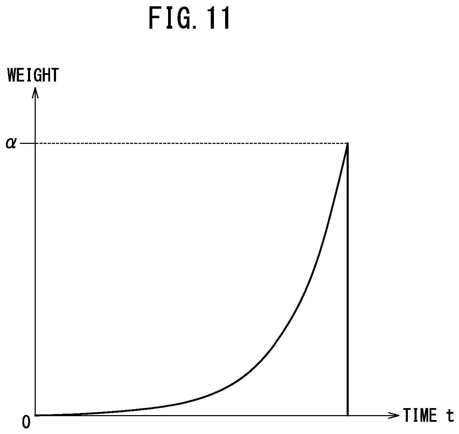

In the smoothing process by the digital LPF 92 in the first embodiment and the second embodiment, exponential smoothing may be used. FIG. 11 is a diagram for describing another example of the smoothing process by the digital LPF 92. In the smoothing process, the detection value D(t) of the machining voltage acquired at time t is compensated by Equation (5), and a compensated value C(t) is output. The compensated value C(t) is a weighted average value of a value obtained by multiplying the detection value D(t) at time t by a weight $\alpha$ ($0 \le \alpha \le 1$), and a value obtained by multiplying the previous compensated value C(t-i) obtained at time t-i by a weight 1-$\alpha$. Stated otherwise, according to the Equation (5), the compensated value C(t) is a weighted average value of the detection values D that were acquired in the past at the predetermined time intervals i.

$$C(t) = \alpha \times D(t) + (1-\alpha) \times C(t-i) \qquad \ldots(5)$$

Each time that the detection value D(t) is acquired along with the passage of time t, the weighted average value of the past detection values D is calculated using the detection value D(t), the previously detected compensated value C(t-i), and the weight $\alpha$, according to the Equation (5). The digital LPF 92 outputs the calculated weighted average value of the detection values D as the compensated value C(t) corresponding to the detection value D(t) acquired at time t. Accordingly, the digital LPF 92 serves as a weighted average filter. The weight $\alpha$ is a parameter of the digital LPF 92.

The adjustment unit 96 adjusts the weight $\alpha$ based on the determination result of the determination unit 94. The adjustment unit 96, by making the weight $\alpha$ smaller, is capable of strengthening the degree of noise removal by the digital LPF 92. The adjustment unit 96, by making the weight $\alpha$ larger, is capable of shortening the response delay of the digital LPF 92. According to the present modification, the performance of the digital LPF 92 can be adjusted relatively easily.

(Modification 2)

The parameter adjustments of the digital LPF 92 in the first embodiment and the second embodiment may be carried out together. In this case, the first determination and the second determination are carried out based on the shape of the machining path RT and the machining conditions of the electrical discharge machining.

In the case that it is determined in the first determination that the degree of noise removal by the digital LPF 92 is weak, the adjustment unit 96 adjusts the parameter of the digital LPF 92, and thereby strengthens the degree of noise removal by the digital LPF 92. In the case that it is determined in the second determination that the response delay of the digital LPF 92 is long, the adjustment unit 96 adjusts the parameter of the digital LPF 92, and thereby shortens the response delay of the digital LPF 92.

When the degree of noise removal by the digital LPF 92 is strengthened, the response delay of the digital LPF 92 becomes longer. If the response delay of the digital LPF 92 is shortened, the degree of noise removal by the digital LPF 92 becomes weaker. By the adjustment unit 96 adjusting the parameters of the digital LPF 92, the degree of noise removal and the response delay of the digital LPF 92 can be appropriately controlled. For example, even in the case that the machining path RT has both an inner corner shape and an outer corner shape, noise in the detection value D is appropriately removed, and the response delay of the digital LPF 92 is prevented from becoming longer. Therefore, according to the present modification, the electrical discharge machining is carried out in a more stable manner. Therefore, high machining accuracy can be maintained.

(Modification 3)

The above modifications 1 and 2 may be combined together.

In the above-described embodiments and the modifications, at least one of the degree of noise removal by the digital LPF 92 or the response delay of the digital LPF 92 is determined based on the shape of the machining path RT and the machining conditions of the electrical discharge machining. Based on such a determination result, the parameter of the digital LPF 92 is adjusted. Accordingly, the electrical discharge machining is stable, and further, the machining accuracy is high.

The following Supplementary Notes are further disclosed in relation to the above embodiments and the modifications.

(Supplementary Note 1)

The control device (20) for the wire electrical discharge machine (10) configured to carry out electrical discharge machining on the workpiece (W), by applying the machining voltage to the electrode gap (G) between the wire electrode (E) and the workpiece to generate the electrical discharge at the electrode gap while moving the wire electrode and the workpiece relatively along the machining path (RT), includes: the acquisition unit (90) configured to acquire the detection value (D) of the machining voltage from the voltage sensor (V) configured to detect the machining voltage; the digital low pass filter (92) configured to output the compensated value (C) obtained by compensating the detection value by removing noise from the detection value; the determination unit (94) configured to carry out, based on the shape of the machining path and the machining condition of the electrical discharge machining, at least one of the first determination to determine the degree of noise removal by the digital low pass filter, or the second determination to determine the response delay of the digital low pass filter; the adjustment unit (96) configured to adjust the parameter (n, $\alpha$) of the digital low pass filter, based on the determination result of the determination unit; and the machining control unit (98) configured to control the electrical discharge machining based on the compensated value.

(Supplementary Note 2)

In the control device for the wire electrical discharge machine according to Supplementary Note 1, in the first determination, in the case it is determined that the degree of noise removal by the digital low pass filter is weak, the adjustment unit may adjust the parameter, and may thereby strengthen the degree of noise removal by the digital low pass filter.

(Supplementary Note 3)

In the control device for the wire electrical discharge machine according to Supplementary Note 2, in the first determination, in the case that the shape of the machining path is the inner corner shape that is curved such that the workpiece is machined into a concave shape, and that conditions in which the discharge power (PR) of the electrical discharge is smaller than the first predetermined value (PR0) and in which the discharge pulse width (PW) of the electrical discharge is smaller than the second predetermined value (PW0) are satisfied as the machining condition, the determination unit may determine that the degree of noise removal by the digital low pass filter is weak.

(Supplementary Note 4)

In the control device for the wire electrical discharge machine according to any one of Supplementary Notes 1 to 3, in the second determination, in the case it is determined that the response delay of the digital low pass filter is long, the adjustment unit may adjust the parameter, and may thereby shorten the response delay of the digital low pass filter.

(Supplementary Note 5)

In the control device for the wire electrical discharge machine according to Supplementary Note 4, the speed at which the wire electrode and the workpiece move relative to each other may be determined based on the machining voltage and the proportional gain (KP), and in the second determination, in the case that the shape of the machining path is the outer corner shape that is curved such that the workpiece is machined into a convex shape, and that a condition in which the proportional gain is smaller than the third predetermined value (KP0) is satisfied as the machining condition, the determination unit may determine that the response delay of the digital low pass filter is long.

(Supplementary Note 6)

In the control device for the wire electric discharge machine according to any one of Supplementary Notes 1 to 5, the machining control unit may control, based on the compensated value, at least one of the relative speed between the wire electrode and the workpiece, or the discharge power of the electrical discharge.

(Supplementary Note 7)

In the control device for the wire electrical discharge machine according to any one of Supplementary Notes 1 to 6, the digital low pass filter may be the moving average filter configured to, each time that the detection value is acquired, output the average value of a predetermined number (n) of the detection values that were acquired in the past, as the compensated value corresponding to the detection value that has been acquired, and the parameter may be the predetermined number.

(Supplementary Note 8)

In the control device for the wire electrical discharge machine according to any one of Supplementary Notes 1 to 6, the digital low pass filter may be the weighted average filter configured to, each time that the detection value is acquired, output a weighted average value obtained by using the detection value, the previously-output compensated value, and the weight ($\alpha$), as the compensated value corresponding to the detection value that has been acquired, and the parameter may be the weight.

(Supplementary Note 9)

The control method for the wire electrical discharge machine (10) configured to carry out electrical discharge machining on the workpiece (W), by applying the machining voltage to the electrode gap (G) between the wire electrode (E) and the workpiece to generate the electrical discharge at the electrode gap while moving the wire electrode and the workpiece relatively along the machining path (RT), includes: the acquisition step of acquiring the detection value (D) of the machining voltage from the voltage sensor (V) configured to detect the machining voltage; the output step of outputting the compensated value (C) obtained by compensating the detection value by removing noise from the detection value by using the digital low pass filter (92); the determination step of carrying out, based on the shape of the machining path and the machining condition of the electrical discharge machining, at least one of the first determination to determine the degree of noise removal by the digital low pass filter, or the second determination to determine the response delay of the digital low pass filter; the adjustment step of adjusting the parameter (n, $\alpha$) of the digital low pass filter, based on the determination result in the determination step; and the machining control step of controlling the electrical discharge machining based on the compensated value.

(Supplementary Note 10)

In the control method for the wire electrical discharge machine according to Supplementary Note 9, in the first determination, in the case it is determined that the degree of noise removal by the digital low pass filter is weak, in the adjustment step, the parameter may be adjusted, and the degree of noise removal by the digital low pass filter may be thereby strengthened.

(Supplementary Note 11)

In the control method for the wire electrical discharge machine according to Supplementary Note 10, in the first determination of the determination step, in the case that the shape of the machining path is an inner corner shape that is curved such that the workpiece is machined into a concave shape, and that conditions in which the discharge power (PR) of the electrical discharge is smaller than the first predetermined value (PR0) and in which the discharge pulse width (PW) of the electrical discharge is smaller than the second predetermined value (PW0) are satisfied as the machining condition, the degree of noise removal by the digital low pass filter may be determined to be weak.

(Supplementary Note 12)

In the control method for the wire electrical discharge machine according to any one of Supplementary Notes 9 to 11, in the second determination, in the case it is determined that the response delay of the digital low pass filter is long, in the adjustment step, the parameter may be adjusted, and the response delay of the digital low pass filter may be thereby shortened.

(Supplementary Note 13)

In the control method for the wire electrical discharge machine according to Supplementary Note 12, the speed at which the wire electrode and the workpiece move relative to each other may be determined based on the machining voltage and the proportional gain (KP), and in the second determination of the determination step, in the case that the shape of the machining path is an outer corner shape that is curved such that the workpiece is machined into a convex shape, and that a condition in which the proportional gain is smaller than the third predetermined value (KP0) is satisfied as the machining condition, the response delay of the digital low pass filter may be determined to be long.

(Supplementary Note 14)

In the control method for the wire electrical discharge machine according to any one of Supplementary Notes 9 to 13, in the machining control step, at least one of the relative speed between the wire electrode and the workpiece, or the discharge power of the electrical discharge may be controlled, based on the compensated value.

Although the present disclosure has been described in detail, the present disclosure is not necessarily limited to each of the respective embodiments. These embodiments may be subjected to various additions, substitutions, modifications, partial deletions, and the like, within a range that does not deviate from the essence and gist of the present disclosure, or the spirit of the disclosure as derived from the contents described in the claims and their equivalents. Further, these embodiments can also be implemented together in combination. For example, in the above-described embodiments, the order of each of the operations and the order of each of the processes are merely shown as examples, and the present invention is not necessarily limited to these examples. Further, the same applies in the case that numerical values or mathematical expressions are used in the description of the aforementioned embodiments.

REFERENCE SIGNS LIST

    10: wire electrical discharge machine
    20: control device
    30: machining power supply
    50: displacement drive unit
    52: table
    60: feed drive unit
    62: upper wire guide
    64: lower wire guide
    80: processing circuit
    82: storage device
    90: acquisition unit
    92: digital LPF (digital low pass filter)
    94: determination unit
    96: adjustment unit
    98: machining control unit

**Claims**

1.  A control device for a wire electrical discharge machine configured to carry out electrical discharge machining on a workpiece, by applying a machining voltage to an electrode gap between a wire electrode and the workpiece to generate an electrical discharge at the electrode gap while moving the wire electrode and the workpiece relatively along a machining path, the control device comprising:

    an acquisition unit configured to acquire a detection value of the machining voltage from a voltage sensor configured to detect the machining voltage;
    a digital low pass filter configured to output a compensated value obtained by compensating the detection value by removing noise from the detection value;
    a determination unit configured to carry out, based on a shape of the machining path and a machining condition of the electrical discharge machining, at least one of a first determination to determine a degree of noise removal by the digital low pass filter, or a second determination to determine a response delay of the digital low pass filter;
    an adjustment unit configured to adjust a parameter of the digital low pass filter, based on a determination result of the determination unit; and
    a machining control unit configured to control the electrical discharge machining based on the compensated value.

2.  The control device for the wire electrical discharge machine according to claim 1, wherein
    in the first determination, in a case it is determined that the degree of noise removal by the digital low pass filter is weak, the adjustment unit adjusts the parameter, and thereby strengthens the degree of noise removal by the digital low pass filter.

3. The control device for the wire electrical discharge machine according to claim 2, wherein
in the first determination, in a case that the shape of the machining path is an inner corner shape that is curved in a manner so that the workpiece is machined into a concave shape, and that conditions in which a discharge power of the electrical discharge is smaller than a first predetermined value and in which a discharge pulse width of the electrical discharge is smaller than a second predetermined value are satisfied as the machining condition, the determination unit determines that the degree of noise removal by the digital low pass filter is weak.

4. The control device for the wire electrical discharge machine according to any one of claims 1 to 3, wherein
in the second determination, in a case it is determined that the response delay of the digital low pass filter is long, the adjustment unit adjusts the parameter, and thereby shortens the response delay of the digital low pass filter.

5. The control device for the wire electrical discharge machine according to claim 4, wherein

a speed at which the wire electrode and the workpiece move relative to each other is determined based on the machining voltage and a proportional gain, and
in the second determination, in a case that the shape of the machining path is an outer corner shape that is curved in a manner so that the workpiece is machined into a convex shape, and that a condition in which the proportional gain is smaller than a third predetermined value is satisfied as the machining condition, the determination unit determines that the response delay of the digital low pass filter is long.

6. The control device for the wire electrical discharge machine according to any one of claims 1 to 5, wherein
the machining control unit controls, based on the compensated value, at least one of a relative speed between the wire electrode and the workpiece, or a discharge power of the electrical discharge.

7. The control device for the wire electrical discharge machine according to any one of claims 1 to 6, wherein

the digital low pass filter is a moving average filter configured to, each time that the detection value is acquired, output an average value of a predetermined number of the detection values that were acquired in a past, as the compensated value corresponding to the detection value that has been acquired, and
the parameter is the predetermined number.

8. The control device for the wire electrical discharge machine according to any one of claims 1 to 6, wherein

the digital low pass filter is a weighted average filter configured to, each time that the detection value is acquired, output a weighted average value obtained by using the detection value, the compensated value that is previously-output, and a weight, as the compensated value corresponding to the detection value that has been acquired, and
the parameter is the weight.

9. A control method for a wire electrical discharge machine configured to carry out electrical discharge machining on a workpiece, by applying a machining voltage to an electrode gap between a wire electrode and the workpiece to generate an electrical discharge at the electrode gap while moving the wire electrode and the workpiece relatively along a machining path, the control method comprising:

an acquisition step of acquiring a detection value of the machining voltage from a voltage sensor configured to detect the machining voltage;
an output step of outputting a compensated value obtained by compensating the detection value by removing noise from the detection value by using a digital low pass filter;
a determination step of carrying out, based on a shape of the machining path and a machining condition of the electrical discharge machining, at least one of a first determination to determine a degree of noise removal by the digital low pass filter, or a second determination to determine a response delay of the digital low pass filter;
an adjustment step of adjusting a parameter of the digital low pass filter, based on a determination result in the determination step; and
a machining control step of controlling the electrical discharge machining based on the compensated value.

10. The control method for the wire electrical discharge machine according to claim 9, wherein
in the first determination, in a case it is determined that the degree of noise removal by the digital low pass filter is weak, in the adjustment step, the parameter is adjusted, and the degree of noise removal by the digital low pass filter is thereby strengthened.

11. The control method for the wire electrical discharge machine according to claim 10, wherein
in the first determination of the determination step, in a case that the shape of the machining path is an inner corner shape that is curved in a manner so that the workpiece is machined into a concave shape, and that conditions in which a discharge power of the electrical discharge is smaller than a first predetermined value and in which a discharge pulse width of the electrical discharge is smaller than a second predetermined value are satisfied as the machining condition, the degree of noise removal by the digital low pass filter is determined to be weak.

12. The control method for the wire electrical discharge machine according to any one of claims 9 to 11, wherein
in the second determination, in a case it is determined that the response delay of the digital low pass filter is long, in the adjustment step, the parameter is adjusted, and the response delay of the digital low pass filter is thereby shortened.

13. The control method for the wire electrical discharge machine according to claim 12, wherein

a speed at which the wire electrode and the workpiece move relative to each other is determined based on the machining voltage and a proportional gain, and
in the second determination of the determination step, in a case that the shape of the machining path is an outer corner shape that is curved in a manner so that the workpiece is machined into a convex shape, and that a condition in which the proportional gain is smaller than a third predetermined value is satisfied as the machining condition, the response delay of the digital low pass filter is determined to be long.

14. The control method for the wire electrical discharge machine according to any one of claims 9 to 13, wherein
in the machining control step, at least one of a relative speed between the wire electrode and the workpiece, or a discharge power of the electrical discharge is controlled, based on the compensated value.

FIG. 1

EP 4 599 970 A1

# FIG. 2

FIG. 3

# FIG. 4

# FIG. 5

MACHINING VOLTAGE

PW

TIME

# FIG. 6

```
                    ( START )
                       │
                       ▼
┌──────────────────────────────────────────────────┐
│  ACQUIRE ELECTRODE POSITION AND MACHINING PATH     │ S1
└──────────────────────────────────────────────────┘
                       │
                       ▼
    ╱  IS MACHINING SHAPE OF MACHINING PATH WHERE  ╲  S2
    ╲  ELECTRODE IS POSITIONED AN INNER CORNER SHAPE? ╱  NO ──┐
                       │ YES                                  │
                       ▼                                      │
┌──────────────────────────────────────────────────┐         │
│  ACQUIRE DISCHARGE POWER AND DISCHARGE PULSE WIDTH │ S3      │
└──────────────────────────────────────────────────┘         │
                       │                                      │
                       ▼                                      │
    ╱  DISCHARGE POWER < FIRST PREDETERMINED VALUE?  ╲  S4     │
                       │ YES                     NO ──────────┤
                       ▼                                      │
    ╱ DISCHARGE PULSE WIDTH < SECOND PREDETERMINED VALUE ╲ S5 │
                       │ YES                     NO ──────────┤
                       ▼                                      │
┌──────────────────────────────────────────────────┐         │
│       DETERMINE THAT DEGREE OF NOISE               │ S6      │
│       REMOVAL BY DIGITAL LPF IS WEAK               │         │
└──────────────────────────────────────────────────┘         │
                       │                                      │
                       ▼                                      │
┌──────────────────────────────────────────────────┐         │
│  ADJUST PARAMETER OF DIGITAL LPF, AND STRENGTHEN   │ S7      │
│  DEGREE OF NOISE REMOVAL BY DIGITAL LPF            │         │
└──────────────────────────────────────────────────┘         │
                       │                                      │
                       ▼                                      │
┌──────────────────────────────────────────────────┐         │
│   ACQUIRE DETECTION VALUE OF MACHINING VOLTAGE     │ S8      │
└──────────────────────────────────────────────────┘         │
                       │                                      │
                       ▼                                      │
┌──────────────────────────────────────────────────┐         │
│              OUTPUT COMPENSATED VALUE              │ S9      │
└──────────────────────────────────────────────────┘         │
                       │◄─────────────────────────────────────┘
                       ▼
┌──────────────────────────────────────────────────┐
│          CONTROL DISCHARGE MACHINING              │ S10
│          BASED ON COMPENSATED VALUE               │
└──────────────────────────────────────────────────┘
                       │
                       ▼
                    ( END )
```

FIG. 7A

FIG. 7B

# FIG. 8

# FIG. 9

```
                    ( START )
                        │
                        ▼
┌──────────────────────────────────────────────┐
│ ACQUIRE ELECTRODE POSITION AND MACHINING PATH │ S1
└──────────────────────────────────────────────┘
                        │
                        ▼
╱──────────────────────────────────────────────╲ S22
│  IS MACHINING SHAPE OF MACHINING PATH WHERE    │────────┐
│ ELECTRODE IS POSITIONED AN OUTER CORNER SHAPE? │  NO    │
╲──────────────────────────────────────────────╱         │
                        │ YES                             │
                        ▼                                 │
┌──────────────────────────────────────────────┐         │
│           ACQUIRE PROPORTIONAL GAIN           │ S23     │
└──────────────────────────────────────────────┘         │
                        │                                 │
                        ▼                                 │
╱──────────────────────────────────────────────╲ S24     │
│ PROPORTIONAL GAIN < THIRD PREDETERMINED VALUE? │────────►
╲──────────────────────────────────────────────╱  NO     │
                        │ YES                             │
                        ▼                                 │
┌──────────────────────────────────────────────┐         │
│          DETERMINE THAT RESPONSE DELAY         │ S25     │
│              OF DIGITAL LPF IS LONG            │         │
└──────────────────────────────────────────────┘         │
                        │                                 │
                        ▼                                 │
┌──────────────────────────────────────────────┐         │
│         ADJUST PARAMETER OF DIGITAL LPF, AND   │ S26     │
│        SHORTEN RESPONSE DELAY OF DIGITAL LPF   │         │
└──────────────────────────────────────────────┘         │
                        │                                 │
                        ▼                                 │
┌──────────────────────────────────────────────┐         │
│    ACQUIRE DETECTION VALUE OF MACHINING VOLTAGE│ S8      │
└──────────────────────────────────────────────┘         │
                        │                                 │
                        ▼                                 │
┌──────────────────────────────────────────────┐         │
│             OUTPUT COMPENSATED VALUE           │ S9      │
└──────────────────────────────────────────────┘         │
                        │ ◄───────────────────────────────┘
                        ▼
┌──────────────────────────────────────────────┐
│            CONTROL DISCHARGE MACHINING         │ S10
│            BASED ON COMPENSATED VALUE          │
└──────────────────────────────────────────────┘
                        │
                        ▼
                    ( END )
```

FIG. 10A

FIG. 10B

# FIG. 11

WEIGHT

α

0

TIME t

## INTERNATIONAL SEARCH REPORT

| International application No. |
|---|
| **PCT/JP2022/042595** |

### A. CLASSIFICATION OF SUBJECT MATTER

**B23H 7/02**(2006.01)i
FI: B23H7/02 S

According to International Patent Classification (IPC) or to both national classification and IPC

### B. FIELDS SEARCHED

Minimum documentation searched (classification system followed by classification symbols)

B23H7/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2017/138137 A1 (MITSUBISHI ELECTRIC CORP.) 17 August 2017 (2017-08-17) claims 1-7, fig. 1-10 | 1-14 |
| A | JP 2000-167717 A (SODICK CO., LTD.) 20 June 2000 (2000-06-20) claims 1-8 | 1-14 |
| A | JP 2-109633 A (BROTHER IND., LTD.) 23 April 1990 (1990-04-23) claim 1, fig. 1-9 | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 January 2023** | **07 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/042595**

| Patent document cited in search report | | | Publication date (day/month/year) | Patent family member(s) | | | Publication date (day/month/year) |
|---|---|---|---|---|---|---|---|
| WO | 2017/138137 | A1 | 17 August 2017 | CN 108698146 A claims 1-7, fig. 1-10 | | | |
| JP | 2000-167717 | A | 20 June 2000 | (Family: none) | | | |
| JP | 2-109633 | A | 23 April 1990 | (Family: none) | | | |

Form PCT/ISA/210 (patent family annex) (January 2015)

**REFERENCES CITED IN THE DESCRIPTION**

**Patent documents cited in the description**

- JP 6883138 B